**Europäisches Patentamt**

**European Patent Office**

**Office européen des brevets**

(19)

(11) Veröffentlichungsnummer : **0 136 507 B1**

# EUROPÄISCHE PATENTSCHRIFT

(12)

(45) Veröffentlichungstag der Patentschrift : 25.05.88

(51) Int. Cl.⁴ : **G 11 B 23/087**

(21) Anmeldenummer : **84109881.7**

(22) Anmeldetag : **20.08.84**

(54) **Magnetbandkassette.**

(30) Priorität : **30.08.83 DE 3331258**

(43) Veröffentlichungstag der Anmeldung : **10.04.85 Patentblatt 85/15**

(45) Bekanntmachung des Hinweises auf die Patenterteilung : **25.05.88 Patentblatt 88/21**

(84) Benannte Vertragsstaaten : **DE FR GB IT NL**

(56) Entgegenhaltungen :
**EP-A- 0 078 696**
**EP-A- 0 090 573**
**EP-A- 0 097 964**
**DE-A- 3 150 317**
**DE-A- 3 302 392**
**FR-A- 2 508 223**

(73) Patentinhaber : **Agfa-Gevaert AG**
**Patentabteilung**
**D-5090 Leverkusen 1 (DE)**

(72) Erfinder : **Pertzsch, Albert, Dipl.-Ing.**
**Leutstettener Strasse 29**
**D-8000 München 71 (DE)**
Erfinder : **Liepold, August**
**Kaltner Weg 12**
**D-8000 München 70 (DE)**
Erfinder : **Brunner, Hubert**
**Mühlgasse 4a**
**D-8911 Weil (DE)**
Erfinder : **Zeroni, Ludwig**
**Neikenstrasse 40**
**D-8012 Ottobrunn (DE)**

## Beschreibung

Die Erfindung bezieht sich auf eine Magnetbandkassette mit einem im wesentlichen rechteckigen, zweiteiligen Gehäuse, das obere und untere parallele Hauptwände und je drei Seitenwände umfaßt und längs der Gehäusevorderseite eine Öffnung aufweist, längs der das von den beiden planparallel angeordneten Spulen kommende Band verläuft, und eine schwenkbar gelagerte Frontklappe, die die Öffnung freigibt bzw. verschließt, bestehend aus einer äußeren und inneren Abdeckung, von denen das Band in geschlossener Stellung der Frontklappe umschlossen ist. Die Frontklappe besitzt außerdem eine Verriegelung gegen unbeabsichtigtes Öffnen. Die Kassette ist geeignet für magnetische Aufnahme- und Wiedergabegeräte wie z. B. für Videobandrecorder.

Bisherige Bandkassetten für Videorecorder haben vorderseitig eine offene Bandführung und einen dahinter liegenden Vertiefungsbereich im Kassettenunterteil. Beim Laden dieser Kassette im Schacht eines Videorecorders wird in diesem Bereich das Bandführungsorgan eingeführt. Zum Schutz nach außen haben diese Kassetten eine schwenkbare Frontklappe, die ganz oder teilweise die Vorderseite der Kassette überdeckt. Die Kassetten sind jedoch im Betrieb wegen der Vertiefungen nicht gegen Staub geschützt, sodaß sich dieser an den Bändern absetzen kann, was zu sogenannten Signalaussetzern führt. Bei einem neueren Typ von Bandkassetten verbleibt zwar die Vertiefung im Kassettenunterteil zur Ladung der Kassette im Videorecorder, doch das Band ist — außer Betrieb — durch eine Frontklappe bestehend aus einer inneren und äußeren Abdeckung, zwischen denen das Band in geschlossener Stellung der Frontklappe festgehalten wird, geschützt. Dadurch kann das Anhaften von Staub auf dem Band wie auch eine Bandbeschädigung verhindert werden. Eine derartige Kassette und deren Frontklappenmechanismus ist beispielsweise in DE-A-32 23 279 und 33 02 392 beschrieben. Die Befestigung und Schwenkbarmachung der Frontklappe in vertikaler Richtung erfolgt durch 2 Löcher in den linken und rechten Endteilen der Seitenwände des Kassettenunterteils, in die 2 Zapfen an den Seitenwänden der Frontklappe einrasten. Um die Frontklappe vertikal zu bewegen bzw. im Gegenuhrzeigersinn Schließstellung zu drücken, dient eine Torsionsfeder, die auf einem der beiden Zapfen sitzt. Das eine Ende der Feder kann an einem Stift in der Seitenwand der Frontklappe aufliegen, während das andere Ende an einem Vorsprung der Seitenwand des Kassettenoberteils anschlägt (Fig. 4 und Fig. 5 von DE-A-33 02 392). In der DE-A-33 31 160 wird zur Vorspannung eine Spiralfeder mit einem auslegenden Arm verwendet, der in einer Rille des vorderen Endes des Kassettenoberteils aufliegt. Eine derartige Ausrüstung der Kassette erlaubt nicht nur eine einfache Montage, sondern vermeidet anbetrachts des beschränkt vorhandenen Raums zwischen Frontklappe und Vorderende des Kassettenoberteils ein mögliches Blockieren der Frontklappe während des Schwenkens. Derartige Kassetten besitzen außerdem eine Frontklappenverriegelung, um ein Öffnen der Frontklappe in Schließstellung zu verhindern. Derartige Verriegelungsmechanismen sind beispielsweise in DE-A-31 50 317 und 32 23 279 beschrieben. Bei der erstgenannten Veröffentlichung wird die Frontklappe mit Hilfe eines vorgespannten Sperrelementes mit Nase von außen entriegelt. Bei der letztgenannten Veröffentlichung enthält das Kassettengehäuse an den seitlichen Endbereichen aus Kunststoff bestehende Blattfederteile mit Sperrklinken, die in Schließstellung der Frontklappen in Sperrlöchern einrasten. Zur Entriegelung drücken am Kassettenhalter befindliche Vorsprünge die Blattfederteile soweit weg, daß die Sperrklinken aus den Sperrlöchern gelöst werden können. Darüberhinaus ist aus EP-A-78 696 ein Verriegelungsmechanismus bekannt für Kassetten insbesondere für Videokassetten, der am vorderen Abschnitt einer Seitenwand des Kassettenunterteils ein von drei Seiten abgeschlossenes Lager aufweist zur Aufnahme eines zweiarmigen Sperriegels, dessen Arme einen Winkel von etwa 45° einschließen. Der Sperriegel ist über einen Lagerzapfen schwenkbar befestigt. Die Sperriegelarme können an ihrem zur Frontklappe weisenden freien Ende eine Nase tragen. Auf der entsprechenden Innenseite des Seitenteils der Frontklappe befindet sich ein Sperrzapfen, hinter den die Nase des Sperriegelarmes greift, wenn die Frontklappe in Schließstellung ist. Zur Vorspannung der Sperrklinke dient eine Blattfeder, die von der Rückwand des Sperrklinkenlagers oder der darüberliegenden Wand des Kassettenoberteiles her andrückt. Die vorspannende Feder kann beispielsweise der zweite Arm einer für die Vorspannung der Frontklappe dienenden Torsionsfeder sein.

Die bisherigen Konstruktionen der Frontklappenverriegelung haben den Nachteil, daß entweder sehr aufwendige Montagehilfen für den Zusammenbau erforderlich sind und/oder kein einwandfreier Übergang der Verriegelung von der Öffnungsstellung der Frontklappe in Schließstellung gegeben ist.

Diese Nachteile werden gemäß der Erfindung durch eine Magnetbandkassette gemäß Patentanspruch 1 behoben : Die Vorspannung der Frontklappe kann mittels Torsionsfedern erfolgen. Zur Vorspannung des Sperriegels zwischen der Rückwand der Sperriegellagerung 18 und dem benachbarten Sperriegelarm 21 kann eine U-förmige Blattfeder 28 positioniert sein.

Anhand von Zeichnungen wird die Erfindung näher erläutert, und zwar zeigen

Fig. 1 eine perspektivische Ansicht der Bandkassette und

Fig. 2 einen Schnitt durch die Frontklappe mit der erfindungsgemäßen Verriegelung.

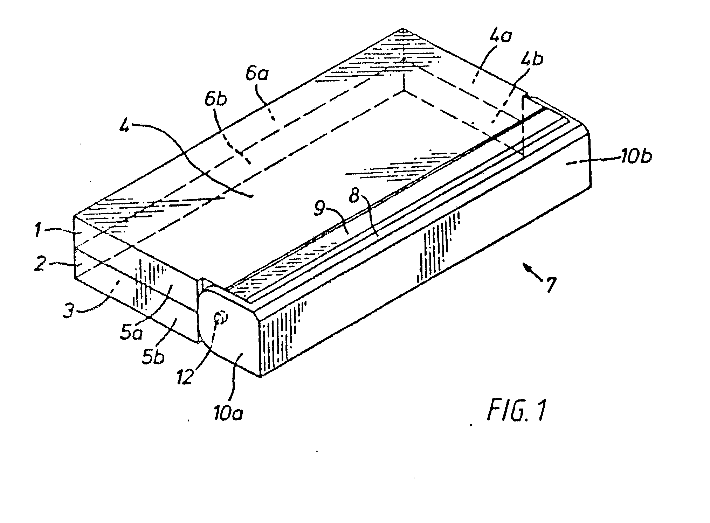

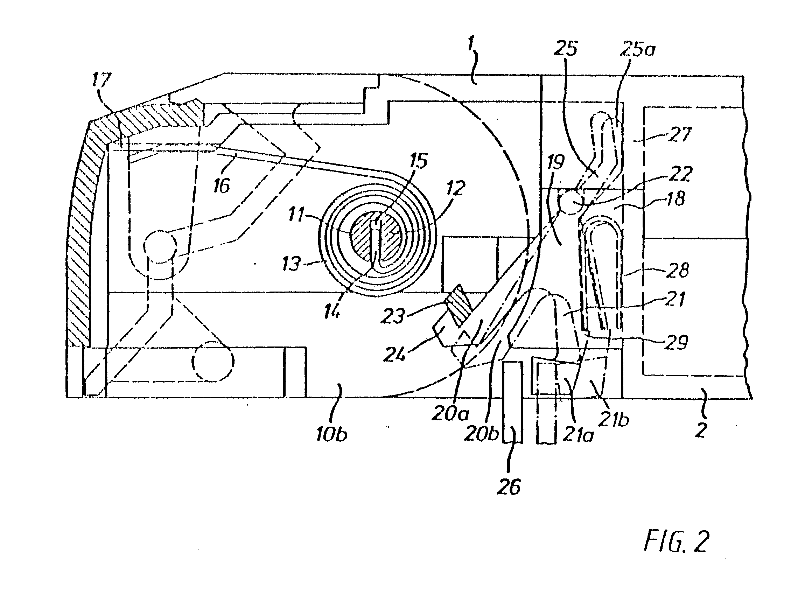

In Fig. 1 ist eine Magnetbandkassette der eingangs beschriebenen Art gezeigt bestehend aus einem Kassettenoberteil 1 und einem Unterteil 2 mit einer unteren 3 und oberen 4 Hauptwand und je drei Seitenwänden 4a, 4b, 5a, 5b, 6a, 6b. In der Kassette befinden sich zwei planparallel angeordnete Bandspulen, wie sie auch von anderen Kassettentypen her bekannt sind, von denen das Magnetband an der Vorderseite des Kassettengehäuses vorbeiläuft und von den Spulen auf- bzw. abgewickelt wird. Die Anordnung der Bandspulen und des Magnetbandes in der Kassette ist im Detail aus Fig. 5 und Fig. 6 von DE-OS-32 23 279 ersichtlich. Die Vorderseite der Kassette enthält eine Frontklappe 7 mit einer äußeren 8 und einer inneren Abdeckung 9 und die Seitenwände des Kassettengehäuses teilweise überlappenden Seitenteilen 10a, 10b, der Frontklappe. Das Magnetband ist bei geschlossener Frontklappe zwischen den beiden Abdeckungen eingeschlossen und so vor Beschädigung geschützt. In den vorderen linken und rechten Abschnitten des Kassettenoberteils nach Fig. 2 befinden sich zwei Löcher 11 und an den Innenseiten der linken und rechten Seitenteile der Frontklappe je ein Schwenkzapfen 12, die in den Löchern gelagert sind und so eine Schwenkung der Frontklappe ermöglichen. Um eine entsprechende Vorspannung der Frontklappe zu erhalten, wird beispielsweise eine einarmige Spiralfeder 13, die auf mindestens einem der Schwenkzapfen 12 sitzt verwendet. Deren Befestigung erfolgt in besonders einfacher Weise durch Umbiegung des inneren Federendes 14 und Einführung in einen Schlitz 15 des Schwenkzapfens. Der auslegende Arm 16 der Spiralfeder verläuft an der Innenseite des Frontklappenseitenteils entlang bis zur Innenseite der äußeren Abdeckung. Beim Zusammensetzen der Einzelteile der Kassette nämlich Frontklappen und Kassettenoberteil legt sich die Spiralfeder selbsttätig in eine Rille 17 an der Außenseite des Kassettenoberteils und sorgt für die Vorspannung der Frontklappe in Schließstellung. Hinter dem Seitenteil der Frontklappe 10b befindet sich auf der entsprechenden Seite im Kassettenunterteil die Lagerung für die Frontklappenverriegelung bestehend aus einer bekannten U-förmigen Wandung 18. Sie nimmt den Sperriegel 19 mit seinen beiden Armen 20a und b, 21a und b, die einen Winkel von etwa 45° einschließen, auf, wobei dieser auf einem Zapfen 22 schwenkbar gelagert ist. Auf der Innenseite des Seitenteils der Frontklappe sitzt noch ein Sperrzapfen 23 der den Schwenkbereich des Sperriegels begrenzt. In der Schließstellung der Frontklappe liegt der vordere Sperriegelarm mit seiner Nase 24 am Zapfen 23 an. Nach dem Laden der Kassette in einem Laufwerk wird durch ein Betätigungselement 26 der andere Sperriegelarm 21a nach hinten 21b geschoben und die Frontklappe entriegelt, bzw. in Öffnungsstellung freigegeben. Der Sperriegel ist erfindungsgemäß über den Lagerzapfen hinaus verlängert. Dieser Verlängerungsarm 25 liegt in Schließstellung der Frontklappe an der über dem Sperriegellager befindliche Wand 27 des Kassettenoberteil an. Dieser Arm kann wie in Fig. 2 gezeigt ist, abgewinkelt ausgebildet sein, wobei nur der abgewinkelte Teil 25a an der Rückwand des Kassettenoberteils anliegt. Diese Form begünstigt die Montage des Sperriegelarmes in der Lagerung, da der Arm leicht durch ein Montageelement erfaßt und·bei Senkrechtstellung desselben eingesteckt werden kann. Er kann auch eine andere Form besitzen z. B. gerade ausgebildet sein und an seinem freien Ende eine Schräge aufweisen, mit der er in Schließstellung an der besagten Rückwand anliegt. Mit dieser Ausführung des Sperriegelanschlags wird verhindert, daß er beim Schwenken von der Offenstellung in die Schließstellung der Frontklappe mit seinem vorderen Arm über den Sperrzapfen rutscht und dadurch sich die Frontklappe unfreiwillig öffnen kann. Außerdem ist in einem solchen Fall der Öffnungsvorgang der Frontklappe bei einer nachfolgenden Beladung der Kassette behindert, da bei Verwendung eines Sperriegels ohne Verlängerungsarm beim Schließen der Sperrzapfen derselben zwischen die beiden Sperriegelarme zu liegen kommt. Dies würde, wie gesagt, bei einer nachfolgenden Beladung den Verriegelungsmechanismus außer Kraft setzen. In der Figur 2 ist die Verriegelungsstellung des Sperriegels gezeigt, die Entriegelungsstellung strichpunktiert wiedergegeben. Um dem Sperriegel die entsprechende Vorspannung zu geben, die diesen in Verriegelungsstellung hält, dient erfindungsgemäß eine U-förmige Blattfeder 28, die zwischen der Rückwand 18 des Kassettenunterteils und dem benachbarten Sperriegelarm 21 angeordnet ist. Diese Blattfeder kann aus Kunststoff oder Metall bestehen. Gegen Herausfallen der Blattfeder aus der Kassette ist diese durch einen Vorsprung 29 an der Rückseite des benachbarten Riegelarmes gesichert. Die Blattfeder kann ferner bei der Montage nicht in den freien Raum des Kassettenoberteils fallen, da dies durch den als Anschlag ausgebildeten Teil des Sperriegels verhindert wird. Ein besonderer Vorteil der so gestalteten Blattfeder, abgesehen von der einfachen Montage als solche, ist, daß diese auch nach Zusammenbau der gesamten Kassette vom Boden des Kassettenunterteils eingesetzt werden kann.

## Patentansprüche

1. Magnetbandkassette für magnetische Aufnahme- und Wiedergabegeräte mit einem im wesentlichen rechteckigen, zweigeteilten Gehäuse, das eine obere und untere Hauptwand mit je drei Seitenwänden umfaßt und das längs seiner Vorderseite eine Öffnung besitzt, längs derer das von den beiden planparallel angeordneten Spulen kommende Magnetband transportiert wird sowie einer schwenkbaren, die Seitenwände teilweise überlappenden Frontklappe (7), die die Öffnung freigibt und verschließt, bestehend aus einer äußeren und inneren Abdeckung (8, 9), von denen das Magnetband in geschlossener Stellung der Frontklappe umschlossen ist, wobei eine Verriegelung der in Schließstellung vorgespannten Frontklappe mittels einem nach vor- und rückwärts bewegbaren Sperriegel in ihrer Schließstellung an einer Seite des Kassettenunterteils erfolgt, dadurch gekennzeichnet, daß der Sperriegel (19), der einem mit einem Zapfen (23) der Frontklappe zusammenwirkenden ersten Arm (20) und einen im spitzen Winkel dazu liegenden mit einem Betätigungselement (26) zusammenwirkbaren zweiten Arm (21) aufweist, über seinen Lagerzapfen (22) hinaus verlängert ist und dieser Verlängerungsarm (25) in Schließstellung der Frontklappe als Anschlag an der dahinterliegenden Wand (27) des Kassettenoberteils dient und zur Vorspannung des Sperriegels zwischen der Rückwand der Sperriegellagerung (18) und dem benachbarten Sperriegelarm (21) eine U-förmige Blattfeder (28) positioniert ist.

2. Magnetbandkassette nach Anspruch 1, dadurch gekennzeichnet, daß sich ein Vorsprung (29) an der Rückseite des zur Blattfeder benachbarten Sperriegels befindet.

3. Magnetbandkassette nach Anspruch 1, dadurch gekennzeichnet, daß der Verlängerungsarm (25) des Sperriegels abgeknickt ist, dessen in das Kassettenoberteil hineinragendes Ende als Anschlag dient.

4. Magnetbandkassette nach Anspruch 1, dadurch gekennzeichnet, daß der Verlängerungsarm des Sperriegels geradlinig ausgebildet ist, um als Anschlag zu dienen.

**Claims**

1. Magnetic tape cassette for magnetic recording and playback devices comprising a substantially rectangular, two-part housing which has an upper and a lower main wall, each with three side walls, and an opening along its front side, along which the magnetic tape coming from the two plane-parallel-positioned reels is transported, and a pivotable front lid (7) which partly overlaps the side walls and which uncovers and closes the opening and consists of an outer and an inner cover (8, 9), by which the magnetic tape is enclosed in the closed position of the front lid, the front lid being locked, in its pretensioned closed position, by means of a locking bar in its closed position, which locking bar may be moved backwards and forwards and is positioned on one side of the lower part of the cassette, characterised in that the locking bar (19), which has a first arm (20) which interacts with a pin (23) of the front lid and, positioned at an acute angle to the first arm (20), a second arm (21) which can interact with an actuating element (26), is prolonged beyond its bearing journal (22), and this prolonged arm (25) in the closed position of the front lid serves as a stop on the wall (27) of the upper part of the cassette positioned behind said prolonged arm (25), and a U-shaped leaf spring (28) is arranged between the back wall of the locking bar bearing (18) and the adjacent locking bar arm (21) to pretension the locking bar.

2. Magnetic tape cassette according to Claim 1, characterised in that a projection (29) is provided on the back of the locking bar adjacent to the leaf spring.

3. Magnetic tape cassette according to Claim 1, characterised in that the prolonged arm (25) of the locking bar is bent, and the end of which, projecting into the upper part of the cassette, serves as a stop.

4. Magnetic tape cassette according to Claim 1, characterised in that the prolonged arm of the locking bar is formed in a straight line in order to serve as a stop.

**Revendications**

1. Cassette de bande magnétique pour appareils d'enregistrement et de reproduction comportant un boîtier essentiellement rectangulaire en deux parties, lequel comprend une face principale supérieure et inférieure avec chacune trois faces latérales et possède sur sa face avant une ouverture le long de laquelle est transportée la bande magnétique venant de deux bobines configurées en faces planes et parallèles, et comportant un volet frontal pivotant (7), recouvrant partiellement les faces latérales dégageant et fermant l'ouverture, constitué d'un recouvrement extérieur et intérieur (8, 9) qui, en position fermée du volet frontal, enferment la bande magnétique, un verrouillage du volet frontal, précontraint en position de fermeture, étant réalisé sur un côté de la partie inférieure de la cassette au moyen d'un verrou de sécurité déplaçable vers l'avant et l'arrière, dans la position de fermeture du volet, caractérisée en ce que le verrou de sécurité (19), qui présente un premier bras (20) coopérant avec un tenon (23) du volet frontal et un deuxième bras (21) formant un angle aigu, pouvant coopérer avec un élément de commande (26), est prolongé au-delà de son tourillon (22) et en ce que ce bras prolongateur (25) sert, en position fermée du volet frontal, de butée contre la face (27), située derrière elle, de la partie supérieure de la cassette, et en ce que pour la précontrainte du verrou de sécurité, entre la face arrière du logement du verrou de sécurité (18) et le bras voisin (21) du verrou de sécurité, un ressort (28) à lame en forme de U est positionné.

2. Cassette de bande magnétique selon la revendication 1, caractérisée en ce que sur la face arrière du verrou de sécurité contigu au ressort à lame se trouve un épaulement (29).

3. Cassette de bande magnétique selon la revendication 1, caractérisée en ce que le bras prolongateur (25) du verrou de sécurité, dont l'extrémité pénétrant dans la partie supérieure de la cassette sert de butée, est coudé.

4. Cassette de bande magnétique selon la revendication 1, caractérisée en ce que le bras prolongateur du verrou de sécurité est rectiligne pour servir de butée.

FIG. 1

0 136 507

FIG. 2